# EUROPÄISCHE PATENTSCHRIFT

(11) **EP 4 256 696 B1**
(45) Veröffentlichungstag und Bekanntmachung des Hinweises auf die Patenterteilung: **23.04.2025**
(21) Anmeldenummer: 21807030.8
(22) Anmeldetag: 05.11.2021
(51) Int. Cl.: H02P 29/66, H02P 21/00, H02P 29/032, B60L 15/20

(54) **VERFAHREN ZUM BETREIBEN EINER ELEKTRISCHEN MASCHINE, VORRICHTUNG, ELEKTRISCHE MASCHINE, KRAFTFAHRZEUG**
METHOD FOR OPERATING AN ELECTRIC MACHINE, DEVICE, ELECTRIC MACHINE, AND MOTOR VEHICLE
PROCÉDÉ DE FONCTIONNEMENT D'UNE MACHINE ÉLECTRIQUE, DISPOSITIF, MACHINE ÉLECTRIQUE ET VÉHICULE AUTOMOBILE

(30) Priorität: 04.12.2020 DE 102020215352
(43) Veröffentlichungstag der Anmeldung: 11.10.2023
(73) Patentinhaber: Robert Bosch GmbH, 70442 Stuttgart (DE)
(72) Erfinder: FALCON ALVA, Erick, 70176 Stuttgart (DE)
(86) Internationale Anmeldenummer: PCT/EP2021/080723
(87) Internationale Veröffentlichungsnummer: WO 2022/117277

(56) Entgegenhaltungen:
- DE-A1- 102014 109 677
- JP-A- 2010 226 914
- GAGAS BRENT S ET AL: "Magnet Temperature Effects on the Useful Properties of Variable Flux PM Synchronous Machines and a Mitigating Method for Magnetization Changes", IEEE TRANSACTIONS ON INDUSTRY APPLICATIONS, IEEE SERVICE CENTER, PISCATAWAY, NJ, US, vol. 53, no. 3, 1 May 2017 (2017-05-01), pages 2189 - 2199, XP011650333, ISSN: 0093-9994, [retrieved on 20170518], DOI: 10.1109/TIA.2017.2674627

## Beschreibung

Die Erfindung betrifft ein Verfahren zum Betreiben einer elektrischen Maschine, die einen drehbar gelagerten Rotor und zumindest eine Motorwicklung aufweist, wobei eine Temperaturbelastung der Maschine ermittelt wird, und wobei die Motorwicklung zum Erzeugen eines vorgegebenen Soll-Drehmomentes in Abhängigkeit von der Temperaturbelastung mit einem elektrischen Motorstrom beaufschlagt wird.

Außerdem betrifft die Erfindung eine Vorrichtung zum Betreiben einer elektrischen Maschine, mit einem Steuergerät.

Ferner betrifft die Erfindung eine elektrische Maschine mit einer derartigen Vorrichtung.

Weiterhin betrifft die Erfindung ein Kraftfahrzeug mit einer derartigen elektrischen Maschine.

### Stand der Technik

Die Druckschriften DE 10 2014 109677 A1, JP 2010 226914 A und GAGAS BRENT S ET AL: "Magnet Temperature Effects on the Useful Properties of Variable Flux PM Synchronous Machines and a Mitigating Method for Magnetization Changes", IEEE TRANSACTIONS ON INDUSTRY APPLICATIONS, IEEE SERVICE CENTER, PISCATAWAY, NJ, US, Bd. 53, Nr. 3, 1. Mai 2017 (2017-05-01), Seiten 2189-2199, XP011650333, ISSN: 0093-9994 offenbaren Verfahren und Vorrichtungen zum Betreiben elektrischer Maschinen. Eine elektrische Maschine weist in der Regel einen drehbar gelagerten Rotor und zumindest eine Motorwicklung auf. Dabei wird im Betrieb einer elektrischen Maschine die Motorwicklung üblicherweise zum Erzeugen eines vorgegebenen Soll-Drehmomentes mit einem elektrischen Motorstrom beaufschlagt. Die Motorwicklung wird also derart bestromt beziehungsweise mit dem Motorstrom beaufschlagt, dass ein Antriebsmagnetfeld erzeugt wird und die elektrische Maschine das vorgegebene Soll-Drehmoment erzeugt beziehungsweise bereitstellt.

Im Betrieb erwärmt sich eine elektrische Maschine, wobei Temperaturen von mehr als 230°C dazu führen können, dass Permanentmagnete einer Permanentmagnetanordnung der elektrischen Maschine entmagnetisiert werden. Eine elektrische Maschine mit zumindest teilweise entmagnetisierten Permanentmagneten liefert nicht mehr die spezifizierte Leistung beziehungsweise fällt vollständig aus, wenn die Permanentmagnete vollständig entmagnetisiert sind. Um die Permanentmagnete vor Entmagnetisierung zu schützen, ist es aus dem Stand der Technik bekannt, eine Temperaturbelastung der elektrischen Maschine zu ermitteln, und die Temperaturbelastung bei der Bestromung der Motorwicklung zu berücksichtigen. Beispielsweise offenbart die Offenlegungsschrift WO 2019/096497 A1 ein Verfahren zum Betreiben einer elektrischen Maschine, gemäß dem die Motorwicklung der Maschine bei hohen Temperaturen derart bestromt wird, dass der magnetische Statorfluss der Maschine verglichen mit niedrigeren Temperaturen verringert ist.

### Offenbarung der Erfindung

Das erfindungsgemäße Verfahren mit den Merkmalen des Anspruchs 1 hat den Vorteil, dass die Haltbarkeit der elektrischen Maschine gesteigert wird. Erfindungsgemäß ist hierzu vorgesehen, dass bei Ermitteln einer einen vorgegebenen Belastungsschwellenwert übersteigenden Temperaturbelastung ein Feldstärkungsmodus der Maschine eingestellt wird, wobei die Motorwicklung in dem Feldstärkungsmodus derart bestromt wird, dass der Motorstrom einen positiven feldbildenden Stromanteil (Id) aufweist. Der durch die Motorwicklung fließende elektrische Motorstrom wird grundsätzlich durch einen drehmomentbildenden Stromanteil (Iq) und einen feldbildenden Stromanteil (Id) gebildet wird. Bezogen auf ein rotorfestes Koordinatensystem fließt der feldbildende Stromanteil parallel zu der Ausrichtung des Magnetfelds der Permanentmagnetanordnung. Der drehmomentbildende Stromanteil fließt senkrecht zu der Ausrichtung des Magnetfelds der Permanentmagnetanordnung und korrespondiert mit dem Drehmoment, das durch die Maschine erzeugt wird. In Abhängigkeit von einem Arbeitspunkt der Maschine ist der drehmomentbildende Stromanteil positiv, negativ oder null. Auch der feldbildende Stromanteil kann grundsätzlich positiv, negativ oder null sein. Erfindungsgemäß wird die Motorwicklung bei Ermitteln der den Belastungsschwellenwert übersteigenden Temperaturbelastung derart bestromt, dass der Motorstrom einen positiven feldbildenden Stromanteil aufweist. Aufgrund des positiven feldbildenden Stromanteils wird eine Feldstärkung des Magnetfelds der Permanentmagnetanordnung erreicht, woraus sich die Bezeichnung Feldstärkungsmodus ableitet. Es wird also aufgrund des positiven feldbildenden Stromanteils ein Magnetfeld erzeugt, das die korrekte Ausrichtung von Mikropolen der Permanentmagnete der Permanentmagnetanordnung unterstützt. Insofern wird durch den positiven feldbildenden Stromanteil eine Entmagnetisierung der Permanentmagnetanordnung der Maschine verhindert beziehungsweise eine Remagnetisierung der Permanentmagnetanordnung erreicht. Es wird also verhindert, dass eine hohe Temperaturbelastung der elektrischen Maschine die Magnetisierung der Permanentmagneten beeinträchtigt. Daraus resultiert die durch das erfindungsgemäße Verfahren erreichte gesteigerte Haltbarkeit der elektrischen Maschine. Vorzugsweise wird in dem Feldstärkungsmodus ein Soll-Stromvektor für den Motorstrom vorgegeben, der einen positiven feldbildenden Stromanteil aufweist, wobei dann die Motorwicklung in Abhängigkeit von dem vorgegebenen Soll-Stromvektor derart bestromt wird, dass der Motorstrom den positiven feldbildenden Stromanteil aufweist. Erfindungsgemäß weist der Rotor die Permanentmagnetanordnung auf. Die Permanentmagneten sind dann also drehfest mit dem Rotor verbunden. Die Motorwicklung ist in diesem Fall als Statorwicklung ausgebildet und um den Rotor verteilt angeordnet.

Gemäß einer bevorzugten Ausführungsform ist vorgesehen, dass die Motorwicklung in dem Feldstärkungsmodus derart bestromt wird, dass der prozentuale Anteil des positiven feldbildenden Stromanteils an dem Motorstrom zumindest 10% beträgt. Hierdurch wird die Entmagnetisierung der Permanentmagnete zumindest im Wesentlichen verhindert. Vorzugsweise beträgt der Anteil des positiven feldbildenden Stromanteils zumindest 20%, besonders bevorzugt zumindest 50%.

Gemäß einer bevorzugten Ausführungsform ist vorgesehen, dass die Motorwicklung in dem Feldstärkungsmodus derart bestromt wird, dass der positive feldbildende Stromanteil größtmöglich ist. Dadurch werden die vorstehend beschriebenen Vorteile hinsichtlich der Verhinderung der Entmagnetisierung beziehungsweise dem Erreichen der Remagnetisierung in besonders hohem Maße bereitgestellt. Die größtmögliche Höhe des positiven feldbildenden Stromanteils wird dabei insbesondere dadurch begrenzt, dass der drehmomentbildende Stromanteil eine bestimmte Höhe aufweisen muss, damit die elektrische Maschine das vorgegebene Soll-Drehmoment erzeugt. Die Motorwicklung wird also in Abhängigkeit von dem vorgegebenen Soll-Drehmoment ein Arbeitspunkt der elektrischen Maschine eingestellt, in dem das vorgegebene Soll-Drehmoment erzeugt wird und der positive feldbildende Stromanteil größtmöglich ist.

Erfindungsgemäß ist vorgesehen, dass die Motorwicklung bei Ermitteln einer den Belastungsschwellenwert unterschreitenden Temperaturbelastung derart bestromt wird, dass der drehmomentbildende Stromanteil zumindest im Wesentlichen dem Motorstrom entspricht. Der Motorstrom ist also zumindest im Wesentlichen frei von einem feldbildenden Stromanteil. Dadurch wird ein Betrieb der elektrischen Maschine mit besonders hohem Wirkungsgrad erreicht. Ein positiver feldbildender Stromanteil ist, weil der Belastungsschwellenwert unterschritten wird, nicht notwendig.

Vorzugsweise wird als Temperaturbelastung der Maschine die Temperaturbelastung des Rotors ermittelt. Dies ist insofern vorteilhaft, als dass der Rotor beziehungsweise die Permanentmagnetanordnung des Rotors der Teil der elektrischen Maschine ist, der vor temperaturbedingten Beschädigungen geschützt werden soll. Durch das Ermitteln der Temperaturbelastung des Rotors kann insofern besonders präzise entschieden werden, ob der positive feldbildende Stromanteil vorteilhaft beziehungsweise notwendig ist, um die Entmagnetisierung zu verhindern beziehungsweise die Remagnetisierung zu erreichen, oder ob der positive feldbildende Stromanteil aufgrund der geringen Temperaturbelastung aktuell keinen Vorteil bringt. Vorzugsweise wird mittels eines Temperatursensors eine Temperatur eines Stators der elektrischen Maschine erfasst und die Temperatur des Rotors wird in Abhängigkeit von der erfassten Temperatur des Stators modellbasiert ermittelt.

Vorzugsweise wird als Temperaturbelastung eine Temperatur, insbesondere die Temperatur des Rotors, ermittelt. In diesem Fall wird als Belastungsschwellenwert eine Schwellentemperatur vorgegeben. Beispielsweise wird als Schwellentemperatur eine Temperatur zwischen 210°C und 250°C vorgegeben, besonders bevorzugt eine Temperatur von 230°C. Alternativ dazu wird als Temperaturbelastung vorzugsweise ein Temperaturintegral der Temperatur, insbesondere der Temperatur des Rotors, ermittelt. In diesem Fall wird dann als Belastungsschwellenwert eine Temperaturintegralschwelle vorgegeben.

Gemäß einer bevorzugten Ausführungsform ist vorgesehen, dass eine Schwellendrehzahl für den Rotor vorgegeben wird, und dass der Feldstärkungsmodus nur bei Vorliegen einer die Schwellendrehzahl unterschreitenden Ist-Drehzahl des Rotors eingestellt wird. Durch ein derartiges Vorgehen wird verhindert, dass bei hohen, die Schwellendrehzahl übersteigenden Ist-Drehzahlen des Rotors eine unerwünscht hohe elektrische Spannung aufgrund der Rotation des Rotors in die Motorwicklung induziert wird. Gemäß einer bevorzugten Ausführungsform ist vorgesehen, dass ein Schwellendrehmoment für das Soll-Drehmoment vorgegeben wird, und dass der Feldstärkungsmodus nur bei Vorliegen eines das Schwellendrehmoment unterschreitenden Soll-Drehmomentes eingestellt wird. Übersteigt das Soll-Drehmoment das Schwellendrehmoment, so könnte die Bereitstellung des positiven feldbildenden Stromanteils die Fähigkeit der elektrischen Maschine beeinträchtigen, das Soll-Drehmoment mit der vorgegebenen Höhe zu erzeugen. Dies ist unerwünscht.

Die erfindungsgemäße Vorrichtung zum Betreiben einer elektrischen Maschine, die einen drehbar gelagerten Rotor und zumindest eine Motorwicklung aufweist, zeichnet sich mit den Merkmalen des Anspruchs 7 durch ein Steuergerät aus, das speziell dazu hergerichtet ist, bei bestimmungsgemäßem Gebrauch das erfindungsgemäße Verfahren durchzuführen. Auch daraus ergeben sich die bereits genannten Vorteile. Weitere bevorzugte Merkmale und Merkmalskombinationen ergeben sich aus dem zuvor Beschriebenen sowie aus den Ansprüchen.

Die erfindungsgemäße elektrische Maschine weist einen drehbar gelagerten Rotor und zumindest eine Motorwicklung auf. Die Maschine zeichnet sich mit den Merkmalen des Anspruchs 8 durch die erfindungsgemäße Vorrichtung aus. Auch daraus ergeben sich die bereits genannten Vorteile. Weitere bevorzugte Merkmale und Merkmalskombinationen ergeben sich aus dem zuvor Beschriebenen sowie aus den Ansprüchen. Vorzugsweise ist die elektrische Maschine als Permanentmagneterregte Synchronmaschine ausgebildet. Insofern weist die elektrische Maschine eine Permanentmagnetanordnung auf. Die Permanentmagnetanordnung ist besonders bevorzugt Teil des Rotors und insofern drehfest mit dem Rotor verbunden.

Das erfindungsgemäße Kraftfahrzeug zeichnet sich mit den Merkmalen des Anspruchs 9 durch die erfindungsgemäße elektrische Maschine aus. Auch daraus ergeben sich die bereits genannten Vorteile. Weitere bevorzugte Merkmale ergeben sich aus dem zuvor Beschriebenen sowie aus den Ansprüchen.

Im Folgenden wird die Erfindung anhand der Zeichnungen näher erläutert. Dazu zeigen
- Figur 1: ein Kraftfahrzeug in einer schematischen Darstellung und
- Figur 2: ein Verfahren zum Betreiben einer elektrischen Maschine des Kraftfahrzeugs.

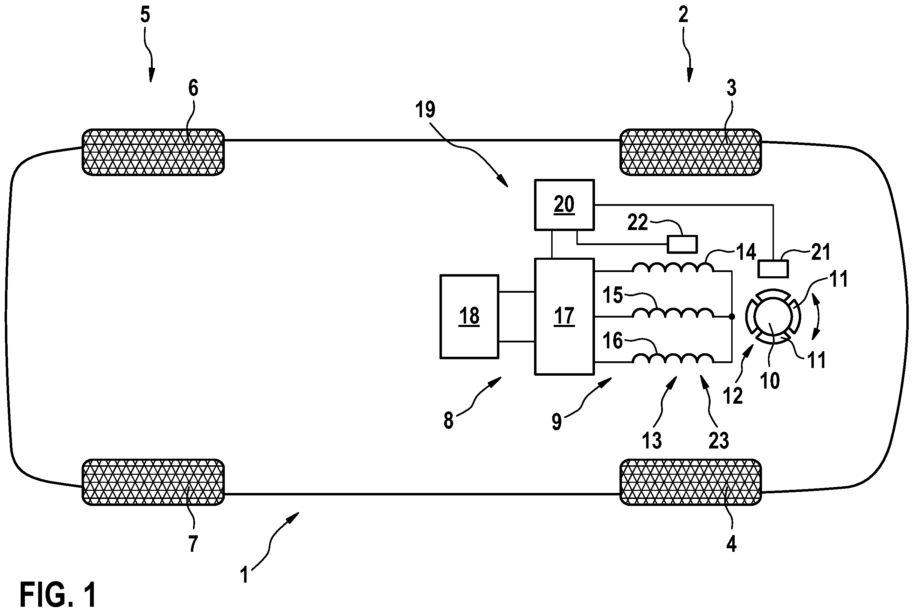

Figur 1 zeigt in einer schematischen Darstellung ein Kraftfahrzeug 1. Das Kraftfahrzeug 1 weist eine Vorderradachse 2 mit zwei Vorderrädern 3 und 4 sowie eine Hinterradachse 5 mit zwei Hinterrädern 6 und 7 auf.

Das Kraftfahrzeug 1 weist außerdem eine Antriebsanordnung 8 mit einer elektrischen Maschine 9 auf, die dazu ausgebildet ist, zumindest eines der Räder 3, 4, 6 und 7 anzutreiben. Beispielsweise ist die Maschine 9 dazu ausgebildet, die Vorderräder 3 und 4, die Hinterräder 6 und 7 oder sowohl die Vorderräder 3 und 4 als auch die Hinterräder 6 und 7 anzutreiben. Optional weist die Antriebsanordnung 8 zusätzlich zu der Maschine 9 zumindest eine weitere elektrische Maschine und/oder zumindest eine Brennkraftmaschine auf.

Die elektrische Maschine 9 weist einen Rotor 10 auf, der in einem nicht dargestellten Gehäuse der Maschine 9 drehbar gelagert ist. Der Rotor 10 weist eine Permanentmagnetanordnung 12 mit zumindest einem Permanentmagneten 11 auf. Vorliegend sind mehreren Permanentmagneten 11 vorhanden. Die Permanentmagneten 11 sind drehfest mit dem Rotor 10 verbunden und in Umfangsrichtung des Rotors 10 verteilt angeordnet. Beispielsweise handelt es sich bei den Permanentmagneten 11 um Neodym-Eisen-Bor-Magneten 11.

Die Maschine 9 weist außerdem eine Motorwicklung 13 auf. Vorliegend handelt es sich bei der Motorwicklung 13 um eine Statorwicklung 13 eines Stators 23 der elektrischen Maschine 9. Vorliegend weist die Statorwicklung 13 drei Phasen 14, 15 und 16 auf. Die Phasen 14, 15 und 16 sind derart verteilt um den Rotor 10 angeordnet, dass der Rotor 10 durch eine geeignete Bestromung der Phasen 14, 15 und 16 drehbar ist. Zusätzlich zu der Statorwicklung 13 weist der Stator 23 beispielsweise einen nicht dargestellten Träger für die Statorwicklung 13 auf.

Die Phasen 14, 15 und 16 sind durch eine mehrere Schaltelemente aufweisende Leistungselektronik 17 der Maschine 9 elektrisch mit einem Energiespeicher 18 des Kraftfahrzeugs 1 verbunden.

Die elektrische Maschine 9 weist außerdem eine Vorrichtung 19 zum Betreiben der Maschine 9 auf. Die Vorrichtung 19 weist ein Steuergerät 20 auf, das dazu ausgebildet ist, die Schaltelemente der Leistungselektronik 17 anzusteuern beziehungsweise zu schalten.

Das Kraftfahrzeug 1 weist außerdem einen dem Rotor 10 zugeordneten Drehzahlsensor 21 auf. Der Drehzahlsensor 21 ist dazu ausgebildet, die Ist-Drehzahl N_{Ist} des Rotors 10 zu erfassen. Der Drehzahlsensor 21 ist kommunikationstechnisch mit dem Steuergerät 20 verbunden, um dem Steuergerät 20 sein Sensorsignal, also die erfasste Ist-Drehzahl N_{Ist}, bereitzustellen.

Das Kraftfahrzeug 1 weist außerdem einen Temperatursensor 22 auf. Der Temperatursensor 22 ist dem Stator 23 zugeordnet und dazu ausgebildet, die Temperatur des Stators 23 zu erfassen. Der Temperatursensor 22 ist kommunikationstechnisch mit dem Steuergerät 20 verbunden, um dem Steuergerät 20 sein Sensorsignal, also die erfasste Temperatur, bereitzustellen.

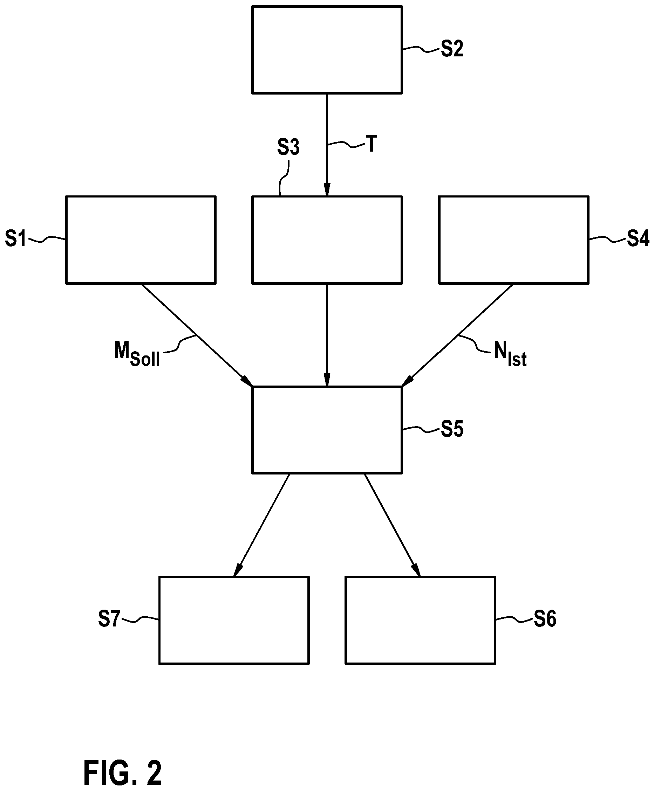

Im Folgenden wird mit Bezug auf Figur 2 ein vorteilhaftes Verfahren zum Betreiben der elektrischen Maschine 9 mittels des Steuergerätes 20 beschrieben.

In einem ersten Schritt S1 gibt das Steuergerät 20 ein Soll-Drehmoment M_{Soll} vor, das durch die Maschine 9 erzeugt werden soll. Beispielsweise ermittelt das Steuergerät 20 die Höhe des vorgegebenen Soll-Drehmoment M_{Soll} in Abhängigkeit von einer Betätigung eines Beschleunigungspedals durch einen Fahrer des Kraftfahrzeugs 1.

In einem zweiten Schritt S2 erfasst der Temperatursensor 21 die Temperatur des Stators 23 und stellt die erfasste Temperatur dem Steuergerät 20 bereit.

In einem dritten Schritt S3 ermittelt das Steuergerät 20 in Abhängigkeit von der durch den Temperatursensor 22 erfassten Temperatur eine Temperaturbelastung der elektrischen Maschine 9. Vorliegend ermittelt das Steuergerät 20 als Temperaturbelastung der elektrischen Maschine 9 die Temperatur des Rotors 10. Dabei ermittelt das Steuergerät 20 die Temperatur des Rotors 10 bevorzugt modellbasiert in Abhängigkeit von der erfassten Temperatur des Stators 23.

In einem vierten Schritt S4 erfasst der Drehzahlsensor 21 die Ist-Drehzahl N_{Ist} des Rotors 10 und stellt dem Steuergerät 20 die erfasste Ist-Drehzahl N_{Ist} bereit.

Die Schritte S1, S2, S3 und S4 werden laufend durchgeführt, sodass laufend das Soll-Drehmoment M_{Soll}, die Temperaturbelastung des Rotors 10 sowie die Ist-Drehzahl N_{Ist} des Rotors 10 ermittelt beziehungsweise erfasst werden.

In einem fünften Schritt S5 entscheidet das Steuergerät 20, ob die elektrische Maschine 9 in einem Standardmodus oder in einem Feldstärkungsmodus beziehungsweise Feldstärkungsbetrieb betrieben werden soll. Hierzu berücksichtigt das Steuergerät 20 in dem Schritt S5 das vorgegebene Soll-Drehmoment M_{Soll}, die ermittelte Temperaturbelastung des Rotors 10 sowie die erfasste Ist-Drehzahl N_{Ist} des Rotors 10. Vorzugsweise wird auch der Schritt S5 laufend durchgeführt.

Dabei gibt das Steuergerät 20 eine Schwellenbelastung für die Temperaturbelastung, eine Schwellendrehzahl für die Ist-Drehzahl N_{Ist} sowie ein Schwellendrehmoment für das Soll-Drehmoment M_{Soll} vor. Als Schwellenbelastung gibt das Steuergerät 20 vorliegend eine Schwellentemperatur vor, besonders bevorzugt eine Schwellentemperatur von 230°C. Das Steuergerät 20 vergleicht dann in dem Schritt S5 das Soll-Drehmoment M_{Soll} mit dem vorgegebenen Schwellendrehmoment, die ermittelte Temperaturbelastung mit der vorgegebenen Schwellenbelastung und die erfasste Ist-Drehzahl N_{Ist} mit der vorgegebenen Schwellendrehzahl.

Ergibt der Vergleich, dass die Temperaturbelastung die Schwellenbelastung übersteigt, dass die Ist-Drehzahl N_{Ist} die Schwellendrehzahl unterschreitet, und dass das Soll-Drehmoment M_{Soll} das Schwellendrehmoment unterschreitet, so wird auf einen sechsten Schritt S6 verwiesen. In diesem Schritt S6 wird dann die elektrische Maschine 9 in dem Feldstärkungsmodus betrieben. Das Steuergerät 20 steuert dann die Schaltelemente der Leistungselektronik 17 derart an, dass ein durch die Motorwicklung 13 fließender elektrischer Motorstrom einen drehmomentbildenden Stromanteil Iq und einen positiven feldbildenden Stromanteil Id aufweist. Durch den drehmomentbildenden Stromanteil Iq wird erreicht, dass die elektrische Maschine 9 das vorgegebene Soll-Drehmoment M_{Soll} erzeugt. Durch den positiven feldbildenden Stromanteil Id wird erreicht, dass ein Magnetfeld erzeugt wird, das parallel zu dem Magnetfeld der Permanentmagneten 11 ausgerichtet ist. Durch dieses Magnetfeld wird verhindert, dass bei einer die Schwellenbelastung übersteigenden Temperaturbelastung des Rotors 10 die Permanentmagneten 11 entmagnetisiert werden. Insbesondere wird erreicht, dass bereits entmagnetisierte Teile der Permanentmagneten 11 remagnetisiert werden. Insofern wird durch das Betreiben der elektrische Maschine 9 in dem Feldstärkungsmodus die Haltbarkeit der Permanentmagnetanordnung 12 und somit die Haltbarkeit der elektrischen Maschine 9 gesteigert.

Ergibt der Vergleich in dem Schritt S5 jedoch, dass das Soll-Drehmoment M_{Soll} das Schwellendrehmoment übersteigt, dass die Temperaturbelastung die Schwellenbelastung unterschreitet, und/oder dass die Ist-Drehzahl N_{Ist} die Schwellendrehzahl übersteigt, so wird auf einen siebten Schritt S7 verwiesen. In dem siebten Schritt S7 wird dann die elektrische Maschine 9 in dem Standardmodus betrieben. Das Steuergerät 20 steuert dann die Schaltelemente der Leistungselektronik 17 derart an, dass der durch die Motorwicklung 13 fließende elektrische Motorstrom zumindest im Wesentlichen durch den drehmomentbildenden Stromanteil Iq gebildet wird. Der Motorstrom ist also bei Betreiben der Maschine 9 in dem Standardmodus zumindest im Wesentlichen frei von einem positiven oder negativen feldbildenden Stromanteil Id. Dabei wird auch in dem Schritt S7 die Motorwicklung derart bestromt, dass durch den drehmomentbildenden Stromanteil Iq erreicht wird, dass die elektrische Maschine 9 das gewünschte beziehungsweise vorgegebene Soll-Drehmoment M_{Soll} erzeugt.

## Patentansprüche

1. Verfahren zum Betreiben einer elektrischen Maschine, die einen drehbar gelagerten Rotor (10) mit einer Permanentmagnetanordnung und zumindest eine Motorwicklung (13) aufweist, wobei eine Temperaturbelastung der Maschine (9) ermittelt wird, und wobei die Motorwicklung (13) zum Erzeugen eines vorgegebenen Soll-Drehmomentes (M_{Soll}) in Abhängigkeit von der Temperaturbelastung mit einem elektrischen Motorstrom beaufschlagt wird, wobei die Permanentmagnetanordnung Permanentmagnete umfasst,
**dadurch gekennzeichnet, dass**
die Motorwicklung (13) bei Ermitteln einer einen vorgegebenen Belastungsschwellenwert unterschreitenden Temperaturbelastung derart bestromt wird, dass ein drehmomentbildender Stromanteil (Iq) des Motorstroms zumindest im Wesentlichen dem Motorstrom entspricht
und
bei Ermitteln einer den Belastungsschwellenwert übersteigenden Temperaturbelastung ein Feldstärkungsmodus der Maschine (9) eingestellt wird, sodass die elektrische Maschine in dem Feldstärkungsmodus betrieben wird, wobei die Motorwicklung (13) in dem Feldstärkungsmodus derart bestromt wird, dass der Motorstrom einen positiven feldbildenden Stromanteil (Id) aufweist.

2. Verfahren nach Anspruch 1, **dadurch gekennzeichnet, dass** die Motorwicklung (13) in dem Feldstärkungsmodus derart bestromt wird, dass der prozentuale Anteil des positiven feldbildenden Stromanteils (Id) an dem Motorstrom zumindest 10% beträgt, vorzugsweise zumindest 20%, besonders bevorzugt zumindest 50%.

3. Verfahren nach einem der vorhergehenden Ansprüche, **dadurch gekennzeichnet, dass** die Motorwicklung (13) in dem Feldstärkungsmodus derart bestromt wird, dass der positive feldbildende Stromanteil (Id) größtmöglich ist.

4. Verfahren nach einem der vorhergehenden Ansprüche, **dadurch gekennzeichnet, dass** als Temperaturbelastung der Maschine (9) die Temperaturbelastung des Rotors (10) ermittelt wird.

5. Verfahren nach einem der vorhergehenden Ansprüche, **dadurch gekennzeichnet, dass** eine Schwellendrehzahl für den Rotor (10) vorgegeben wird, und dass der Feldstärkungsmodus nur bei Vorliegen einer die Schwellendrehzahl unterschreitenden Ist-Drehzahl (N_{Ist}) des Rotors (10) eingestellt wird.

6. Verfahren nach einem der vorhergehenden Ansprüche, **dadurch gekennzeichnet, dass** ein Schwellendrehmoment für das Soll-Drehmoment (M_{Soll}) vorgegeben wird, und dass der Feldstärkungsmodus nur bei Vorliegen eines das Schwellendrehmoment unterschreitenden Soll-Drehmomentes (M_{Soll}) eingestellt wird.

7. Vorrichtung zum Betreiben einer elektrischen Maschine, wobei die Maschine (9) einen drehbar gelagerten Rotor (10) und zumindest eine Motorwicklung (13) aufweist, **dadurch gekennzeichnet, dass** die Vorrichtung (19) ein Steuergerät (20) aufweist, das speziell dazu hergerichtet ist, bei bestimmungsgemäßem Gebrauch das Verfahren gemäß einem der vorhergehenden Ansprüche durchzuführen.

8. Elektrische Maschine, mit einem drehbar gelagerten Rotor (10), und mit zumindest einer Motorwicklung (13), **gekennzeichnet durch** eine Vorrichtung (19) gemäß dem vorhergehenden Anspruch.

9. Kraftfahrzeug, **gekennzeichnet durch** eine elektrische Maschine (9) gemäß dem vorhergehenden Anspruch.

## Claims

1. Method for operating an electric machine, which has a rotatably mounted rotor (10) with a permanent magnet arrangement and has at least one motor winding (13), wherein a temperature load of the machine (9) is determined, and wherein an electric motor current is applied to the motor winding (13) to generate a specified desired torque (M_{desired}) in dependence on the temperature load, wherein the permanent magnet arrangement comprises permanent magnets,
**characterized in that**
when a temperature load below a specified load threshold value is determined, the motor winding (13) is energized in such a way that a torque-forming current component (Iq) of the motor current corresponds at least substantially to the motor current
and
when a temperature load above the load threshold value is determined, a field-strengthening mode of the machine (9) is set, so that the electric machine is operated in the field-strengthening mode, wherein the motor winding (13) in the field-strengthening mode is energized in such a way that the motor current has a positive field-forming current component (Id).

2. Method according to Claim 1, **characterized in that** the motor winding (13) in the field-strengthening mode is energized in such a way that the percentage share of the positive field-forming current component (Id) in the motor current is at least 10%, preferably at least 20%, particularly preferably at least 50%.

3. Method according to one of the preceding claims, **characterized in that** the motor winding (13) in the field-strengthening mode is energized in such a way that the positive field-forming current component (Id) is as large as possible.

4. Method according to one of the preceding claims, **characterized in that** the temperature load of the rotor (10) is determined as the temperature load of the machine (9).

5. Method according to one of the preceding claims, **characterized in that** a threshold speed is specified for the rotor (10), and **in that** the field-strengthening mode is only set in the presence of an actual speed (N_{actual}) of the rotor (10) below the threshold speed.

6. Method according to one of the preceding claims, **characterized in that** a threshold torque is specified for the desired torque (M_{desired}), and **in that** the field-strengthening mode is only set in the presence of a desired torque (M_{desired}) below the threshold torque.

7. Device for operating an electric machine, wherein the machine (9) has a rotatably mounted rotor (10) and at least one motor winding (13), **characterized in that** the device (19) has a control unit (20) specifically configured to carry out the method according to one of the preceding claims when it is used as intended.

8. Electric machine, having a rotatably mounted rotor (10), and having at least one motor winding (13), **characterized by** a device (19) according to the preceding claim.

9. Motor vehicle **characterized by** an electric machine (9) according to the preceding claim.

## Revendications

1. Procédé pour faire fonctionner une machine électrique comprenant un rotor (10) monté rotatif avec un agencement d'aimants permanents et au moins un enroulement de moteur (13), une charge de température de la machine (9) étant déterminée, et un courant électrique de moteur étant appliqué à l'enroulement de moteur (13) pour générer un couple théorique prédéfini (M_{Soll}) en fonction de la charge de température, l'agencement d'aimants permanents comprenant des aimants permanents,
**caractérisé en ce que**
l'enroulement de moteur (13) est alimenté en courant lorsqu'il est déterminé qu'une charge de température est inférieure à un seuil de charge prédéfini, de telle sorte qu'une composante de courant (Iq) du courant de moteur de formation de couple corresponde au moins sensiblement au courant de moteur
et
lorsqu'il est déterminé qu'une charge de température dépasse le seuil de charge, un mode de renforcement de champ de la machine (9) est activé, de sorte que la machine électrique fonctionne dans le mode de renforcement de champ, l'enroulement de moteur (13) étant alimenté en courant dans le mode de renforcement de champ de telle sorte que le courant de moteur présente une composante de courant de formation de champ positive (Id).

2. Procédé selon la revendication 1, **caractérisé en ce que** l'enroulement de moteur (13) est alimenté en courant dans le mode de renforcement de champ de telle sorte que le pourcentage de la composante de courant de formation de champ positive (Id) dans le courant de moteur soit d'au moins 10%, de préférence d'au moins 20%, et de manière particulièrement préférée d'au moins 50%.

3. Procédé selon l'une quelconque des revendications précédentes, **caractérisé en ce que** l'enroulement de moteur (13) est alimenté dans le mode de renforcement de champ de telle sorte que la composante de courant de formation de champ positive (Id) soit la plus élevée possible.

4. Procédé selon l'une quelconque des revendications précédentes, **caractérisé en ce que** la charge de température du rotor (10) est déterminée en tant que charge de température de la machine (9).

5. Procédé selon l'une quelconque des revendications précédentes, **caractérisé en ce qu'**une vitesse de rotation de seuil est prédéfinie pour le rotor (10), et **en ce que** le mode de renforcement de champ n'est activé qu'en présence d'une vitesse de rotation réelle (N_{Ist}) du rotor (10) inférieure à la vitesse de rotation de seuil.

6. Procédé selon l'une quelconque des revendications précédentes, **caractérisé en ce qu'**un couple de seuil est prédéfini pour le couple théorique (M_{Soll}), et **en ce que** le mode de renforcement de champ n'est activé qu'en présence d'un couple théorique (M_{Soll}) inférieur au couple de seuil.

7. Dispositif pour faire fonctionner une machine électrique, la machine (9) comprenant un rotor (10) monté rotatif et au moins un enroulement de moteur (13), **caractérisé en ce que** le dispositif (19) comprend un appareil de commande (20) spécialement adapté pour mettre en œuvre, lors d'une utilisation conforme à sa destination, le procédé selon l'une quelconque des revendications précédentes.

8. Machine électrique, comprenant un rotor (10) monté rotatif, et au moins un enroulement de moteur (13), **caractérisée par** un dispositif (19) selon la revendication précédente.

9. Véhicule automobile **caractérisé par** une machine électrique (9) selon la revendication précédente.
